Europäisches Patentamt

European Patent Office

Office européen des brevets

(19)

(11) Veröffentlichungsnummer: **0 334 356**
**A1**

(12) **EUROPÄISCHE PATENTANMELDUNG**

(21) Anmeldenummer: **89105244.1**

(22) Anmeldetag: **23.03.89**

(51) Int. Cl.⁴: **H01J 61/22 , H01J 61/82 ,
H05B 41/16**

(30) Priorität: **25.03.88 DD 314030**

(43) Veröffentlichungstag der Anmeldung:
**27.09.89 Patentblatt 89/39**

(84) Benannte Vertragsstaaten:
**BE DE FR GB NL**

(71) Anmelder: **Kombinat VEB NARVA
Ehrenbergstrasse 11-14
DDR-1017 Berlin(DD)**

(72) Erfinder: **Erbs, Harry
Singer Strasse 25
DDR-1017 Berlin(DD)**
Erfinder: **Günther, Klaus
Amalienpark 3
DDR-1100 Berlin(DD)**
Erfinder: **Gynz-Rekowski, Henning von
Hufelandstrasse 43
DDR-1055 Berlin(DD)**
Erfinder: **Kloss, Hans-Georg
Eichenallee 24
DDR-1406 Hohen-Neuendorf(DD)**
Erfinder: **Radtke, Rainer
Pestalozzistrasse
DDR-1100 Berlin(DD)**
Erfinder: **Serick, Felix
Königswinterstrasse 3
DDR-1272 Neuenhagen(DD)**

(74) Vertreter: **Ritter und Edler von Fischern,
Bernhard,Dipl.-Ing. et al
HOFFMANN - EITLE & PARTNER
Arabellastrasse 4
D-8000 München 81(DE)**

(54) **Wandstabilisierte Metalldampfentladungslampe.**

(57) Eine wandstabilisierte Metalldampf-Entladungslampe weist einen kompakten Aufbau, einen hohen lichttechnischen Wirkungsgrad und gute Farbeigenschaften auf. Sie ist für allgemeine Beleuchtungsaufgaben geeignet, weist eine Farbtemperatur im Bereich 3000 ... 4000 K auf und kann für einen weiter Leistungsbereich, insbesondere auch für sehr niedrige Leistungen, ausgelegt werden. Es wird eine Entladung in Caesium oder Rubidium ausgenutzt, deren Plasma mit leistungsstarken Impulsen hoher Folgefrequenz und kleinem Tastverhältnis so weit aufgeheizt wird, daß das über den sichtbaren Spektralbereich verteilte Rekombinatikonskontinuum mit hoher Intensität abgestrahlt wird und daß diese die Intensität der Linienstrahlung in den lichttechnische unwirksamen Spektralbereichen übertrifft.

Xerox Copy Centre

Fig. 1

## Wandstabilisierte Metalldampf-Entladungslampe

Die Erfindung betrifft eine Metalldampf-Entladungslampe für allgemeine Beleuchtungszwecke, vorzugsweise für Brennstellen in Innenräumen, die nicht häufig geschaltet werden, welche bei kompaktem Aufbau, hohem lichttechnischen Wirkungsgrad und sehr guten Farbeigenschaften für einen weiten Leistungsbereich, insbesonderen auch für sehr niedrige Leistungen, ausgelegt werden kann.

Es existieren zahlreiche Hochdruck-Entladungslampen für allgemeine Beleuchtungszwecke, bei denen hohe Lichtausbeute und gute Farbwiedergabeeigenschaften, d. h. eine im Bereich der Augenempfindlichkeitskurve gut verteilte spektrale Emission, angestrebt werden. Es ist bekannt, daß eine Lichtquelle mit idealer Farbwiedergabe eine maximale Lichtausbeute von etwa 250 lm/W erreichen kann, wenn es gelingt, Wärme- und Elektrodenverluste zu unterdrücken und die spektrale Emissionsverteilung auf den Bereich der sichtbaren Strahlung zu beschränken. Diese optimale Emissionsverteilung verläuft im Spektralbereich zwischen 400 und 700 nm proportional zur spektralen Emission eines schwarzen Strahlers mit einer Temperatur, die der gewünschten Farbtemperatur der Lichtquelle gleich ist, und ist außerhalb dieses Spektralbereiches gleich Null.

Abgesehen von den nicht vermeidbaren Wärme- und Elektrodenverlusten ist die Lichtausbeute einer Hochdruck-Entladungslampe über die spektrale Emissionsverteilung des strahlenden Plasmas durch die Zusammensetzung und den Druck des Entladungsmediums, die Abmessungen des Entladungsrohres und die räumliche Temperaturverteilung der Entladung gegeben und nur innerhalb gewisser Grenzen optimierbar. So kann in einer Quecksilberdampfatmosphäre bei einem Druck von 0.1 bis 10 MPa eine Gasentladung betrieben werden, die im sichtbaren Spektralbereich die bekannten Quecksilberlinien 405, 436, 546 und 577/599 nm emittiert. Die sehr intensive Strahlung bei 313 und 365 nm kann durch einen geeigneten Leuchtstoff in den sichtbaren Spektralbereich transformiert werden. Solche Quecksilber-Hochdrucklampen haben insbesondere in der Außenbeleuchtung eine weite Verbreitung gefunden; ihre Lichtausbeute beträgt maximal 55 lm/W, und der allgemeine Farbwiedergabeindex liegt bei 50 (vgl. Elenbaas, W.: High-pressure mercury-vapor lamps and their application; Philips Technical Library, 1965).

Es ist gelungen, durch Einbringen geeigneter leicht verdampfbarer Leuchtzusätze das lückenhafte Quecksilberspektrum aufzufüllen mit dem Ergebnis, daß sich sowohl die Lichtausbeute als auch die Farbwiedergabe erheblich verbessert haben. Solche Halogen-Metalldampflampen erreichen bei höherem Leistungsumsatz Lichtausbeuten von 60 bis 80 lm/W bei allgemeinen Farbwidergabeindices von 60 bis 90, wobei in der Regel die hohen Werte der Lichtausbeute mit niedrigen Werten des Farbwiedergabeindex kombinieren und umgekehrt. Bei kleinen Leistungsumsätzen, die inzwischen bis herab zu 35 W reichen, sinkt die Lichtausbeute erheblich. Solche Lichtquellen haben in der Beleuchtung von Innenräumen, Fertigungsräumen und Verkaufseinrichtungen große Verbreitung gefunden, ihr Einsatz beschränkt sich jedoch durch die deutlich verminderte Lebensdauer, die Brennlageabhängigkeit und die sehr störende Instabilität der Farbtemperatur infolge Exemplarstreuungen und Alterung (vgl. Rochlin, G. N.: Halogen-Metalldampflampen; Verlag Energija Moskau 1971). Die Entwicklung alkaliresistenter Hüllwerkstoffe und Verschlußmaterialien hat die Verwendung von Natrium in metallischer Form als Träger der Lichtemission möglich gemacht. Natriumdampf-Hochdrucklampen nehmen gegenwärtig unter allen bekannten Hochdruck-Entladungslampen bezüglich ihrer Lichtausbeute eine Spitzenstellung ein und haben bei der Außenbeleuchtung eine weite Verbreitung gefunden. Die Palette der angebotenen Leistungstypen reicht von 35 W mit einer Lichtausbeute von 75 lm/W bis 1000 W mit 150 lm/W. Wegen der sehr niedrigen Farbtemperatur von etwa 2000 K und des unbefriedigenden Farbwiedergabeindex von etwa 20 werden solche Lampen jedoch für anspruchsvollere Beleuchtungsaufgaben, speziell in der Innenraumbeleuchtung, nicht akzeptiert. Neuere Entwicklungen zur Farbverbesserung von Natriumdampf-Hochdrucklampen beheben diesen Mangel nur teilweise. Seit etwa 1980 werden zusätzlich farbverbesserte Ausführungen angeboten, bei denen die den Dampfdruck bestimmende Temperatur der kältesten Stelle im Entladungsgefäß angehoben wurde. Für diese Lampen werden Farbtemperaturen bis 2500 K und Farbwiedergabewerte bis 80 angegeben. Diese Verbesserungen sind jedoch mit einer Verringerung der Lichtausbeute bis zu 40 % und einer Reduzierung der Lebensdauer um z. T. mehr als den Faktor 2 verbunden (vgl. z. B. J. A. J. van Vliet, J. J. de Groot; High pressure sodium lamps IEE Proc. 128, 415 - 451 (1981)). Auch die Verwendung von Rot absorbierenden Filtergläsern zur Anhebung der Farbtemperatur (DE 2 711 733) ist mit großen Lichtausbeuteverlusten gekoppelt. Andere Versuche, die Farbeigenschaften von Natriumdampf-Hochdrucklampen durch Zugabe von Quecksilber, Cadmium, Thallium, Zink oder Blei bzw. Kombinationen aus diesen Elementen (US-PS 3 248 590 und 3 521 108, GB-PS 1 192 094 und 1 280 370) zu verbessern, haben bisher zu keiner kommerziell brauchbaren Lampe geführt. Dies ist aus plasmaphysikalischer Sicht verständlich, da der stationär betriebene Bogen solcher Lampen mit Achsentemperaturen von etwa 4000 K nur sehr ungünstige Anregungsbedingungen für energetisch höher gelegene Strahlungsprozesse bietet. Gelegentlich werden auch Natrium-Hochdrucklampen mit Zusätzen von Cadmium beschrieben (DE 2 032 615), bei denen das Cadmium als Puffergas fungiert und zur Stabilisierung der Lampenparameter beitragen soll. Zusätze von Cadmium, Thallium, Zink, Blei, Zinn und Wismut sind vorgeschlagen worden (DE 2 707 203), um im Interesse geringer Umweltschädlichkeit und besserer Luftbeständigkeit der Füllsubstanzen den Quecksilberanteil in den Natriumdampf-Hochdrucklampen zu verringern. Es sind Bestrebungen bekannt, durch eine zeitlich modifizierte Energieeinspeisung in Form von Impulsen mit einem bestimmten Tastverhältnis und einer Frequenz über 100 Hz die spektrale Verteilung des von Entladungslampen emittierten Lichtes zu verbessern. Durch den gegenüber stationärem Betrieb konzentrierten Energieumsatz werden zeitweilig höhere Plasmatemperaturen erzeugt, wodurch im allgemeinen Strahlungsprozesse mit höheren Anregungsenergien begünstigt werden. Ob und wie diese Tendenz im konkreten Fall zum Tragen kommt, hängt neben der jeweiligen Form und Höhe der Temperaturprofile auch von der Geometrie der Entladungsgefäße ab, da erhebliche Anteile der Strahlung die Plasmasäule nicht direkt, sondern nach Reabsorbtion durch verwickelte Stufenprozesse verlassen. Die zeitliche Modulation der Energieeinspeisung und die deshalb einzubeziehende Dynamik der Plasmasäule schaffen insgesamt bereits bei Einkomponentenplasmen derartig komplizierte Verhältnisse, daß eine Vorausberechnung lichttechnischer Daten zur Zeit noch nicht möglich ist. Durch eine impulsmäßige Energieeinspeisung mit einem Tastverhältnis von 1 : 4 bis 1 : 20 wurde bei Quecksilberhochdrucklampen (US-PS 3 624 447) versucht, die Strahlungsausbeute der grünen und gelben Quecksilberlinien zu verbessern.

Bei Natrium-Hochdrucklampen sollte nach der gleichen Technik (US-PS 4 137 484, DE 2 657 824 und 2 825 532) die Breite der Resonanzlinien vergrößert sowie der blaue und grüne Spektralanteil angehoben werden, um dadurch die Farbwiedergabe zu verbessern und die Farbtemperatur anzuheben. Hier wird der Lampe die Energie in Form von Einzelimpulsen bei einer Frequenz von 500 .. 2000 Hz und einem Tastverhältnis von 1 : 3 bis 1 : 10 zugeführt, wobei die Durchschnittsleistung und damit die thermische Belastung der Lampe nicht erhöht werden, während die Stromstärke im Impuls deutlich über den sonst üblichen Werten liegt. Dabei wurde die Verwendung eines Haltestromes zwischen den Impulsen in Höhe von 15 % des durchschnittlichen Stromes als Stand der Technik genannt. Auf diese Weise kann die Farbtemperatur auf 2300 .. 2600 K angehoben werden. Instabilitäten der Entladung und akustische Störungen der Umgebung lassen sich durch konstruktive Maßnahmen an solche Lampen (DE 2 733 168 und 2 733 170) und spezielle Betriebsweisen (DE 2 335 589, 2 704 311, 2 847 840 und 3 122 183) verhindern. Allerdings sind die so erreichbaren Farbtemperaturen für einen Einsatz bei der Innenraumbeleuchtung, insbesondere im Wohnbereich, immer noch zu niedrig, weil hierfür Werte von 3000 K und mehr wünschenswert sind. Die Versuche wurden auch deshalb wieder aufgegeben, weil die unerwünschten Nebenwirkungen, wie verstärkte Selbstabsorption der Resonanzlinien des Natriums und unterproportionale Anhebung der Quecksilberlinien, den angestrebten Effekt in Frage stellen und weitere Steigerungen der Farbtemperatur nur unter Inkaufnahme großer Einbußen an Lichtausbeute möglich zu sein scheinen. Ein Betrieb von Natriumdampf-Hockdrucklampen, welche neben Natrium noch wenigstens einen anderen Metalldampf enthalten, mit Gleichstromimpulsen von 50 .. 23 000 Hz und mit einem Tastverhältnis zwischen 8 und 80 % wurde auch zum Zweck einer Verhinderung von Entmischungserscheinungen vorgeschlagen (DE 2 729 052). Eine sonnenlichtähnliche Strahlungsemission mit kontinuierlicher Spektralverteilung ist von Hochdruckentladungen mit Xenon als strahlendes Medium bekannt, welche sich aus dem Rekombinationskontinuum des Xenons ergibt. Xenonhoch- und -höchstdrucklampen werden für stationären Betrieb mit Leistungen von 50 .. 50 000 W gebaut und zeichnen sich durch eine hervorragende Farbwiedergabe, verbunden mit einer Farbtemperatur im Bereich von 6000 K, aus. Bedauerlicherweise sind jedoch die Lichtausbeuten mit 14 lm/W bei der 50-W-Lampe bis zu etwa 35 lm/W bei sehr großen Leistungseinheiten recht gering. Das hat seinen Grund u. a. darin, daß im Bereich stationärer Leistungen dieses Kontinuum von einer intensiven Linienstrahlung überlagert ist, die vorwiegend im Infrarotbereich emittiert wird und die die erreichbare Lichtausbeute erheblich begrenzt. Aus diesem Grunde werden stationäre Xenonentladungen als effektive Lichtquelle für allgemeine Beleuchtungszwecke nicht verwendet.

Auch eine stationäre Hochdrucklampe mit Caesiumdampf als strahlendes Medium wurde bereits vorgeschlagen, die bei einer Leistungsaufnahme von 700 W Lichtausbeuten von 35 bis 50 lm/W erreichen soll (US-PS 2 971 110 und 3 219 896). Diese von anderen Autoren nicht bestätigten und nach neueren Messungen an stationären Entladungen zu hohen Werte sind außerdem für Entladungsgefäße mit kleinerer Leistungsaufnahme erheblich zu reduzieren, so daß das lichttechnische Interesse an Caesiumentladungen in den letzten zwanzig Jahren erloschen war.

Allen bisher genannten Hochdrucklampen ist gemein, daß sie jeden Versuch, den Leistungsumsatz zu reduzieren und im Wohnbereich übliche Leistungseinheiten zu entwickeln, mit drastischen Einbußen an Lichtausbeute beantworten. Die Ursache hierfür liegt einmal darin, daß entsprechend den Wirkungsmechanismen einer Hochdrucklampe kleine Lichtströme nur in kleinen Volumina erzeugt werden können, wobei zwangsläufig der Temperaturgradient und damit der durch Wärmeleitung und Teilchendiffusion aus den heißen Zonen der Entladung zur Wand verursachte Wärmeverlust ansteigt. Zum anderen erfordert die Nutzung von Metalldämpfen oder Halogeniden als strahlendes Medium eine minimale Innenwandtemperatur des Entladungsgefäßes, die die erforderlichen Dampfdrücke ge währleistet. Diese Temperaturen liegen relativ hoch und haben ebenfalls unvermeidbare Wärmeverluste zur Folge, die insbesondere bei niedrigen Leistungsumsätzen der Lampen erheblich ins Gewicht fallen.

Alte Entladungslichtquellen enthalten als energiewandelnde Medien elektrisch aufgeheizte Plasmen, deren elektrische Eigenschaften sich in Abhängigkeit von der zugeführten spezifischen Leistung ändern. Insbesondere steigt bei Erhöhung der Betriebsspannung der Leistungsumsatz, wodurch die Ladungsträgerdichte wächst. Damit erhöht sich die elektrische Leitfähigkeit und die Leistungsaufnahme steigt weiter. Um den daraus folgenden Instabilitäten entgegenzuwirken, müssen Entladungslampen über Vorschaltgeräte betrieben werden, die insbesondere strombegrenzende Bauelemente enthalten. Masse und Umfang dieser strombegrenzenden Bauelemente erschweren den Einsatz solcher Lichtquellen vor allem im Wohnbereich. Um eine Strom-Spannungskennlinie mit positivem Anstieg zu realisieren, wurde für Natrium-Hochdrucklampen die Einhaltung spezieller Druckbereiche bzw. Druckverhältnisse bei der Lampenfüllung (US-PS 3 248 590, DE 2 600 351) oder die Kombination zweier Metalle mit unterschiedlicher Ionisierungsenergie (DE 1 539 438) empfohlen. Bei Xenon- und anderen Edelgas-Hochdrucklampen soll die gleiche Wirkung durch Beimengungen von Metallen oder Metallsalzen (DE 2 236 973 und 2 525 408) oder durch den Einsatz besonderer Hüllwerkstoffe bei extremen Wandtemperaturen (AT-PS 222 223) erreicht werden. An der Wirksamkeit der behaupteten Effekte bestehen jedoch erhebliche Zweifel, da die Plasmen stationär betriebener Entladungslampen Ionisierungsgrade im Prozentbereich und darunter aufweisen. Deshalb führt jede Erhöhung des Stromes und damit der Plasmatemperatur zu einer so wesentlichen Steigerung der elektrischen Leitfähigkeit des Plasmas, daß man sich im fallenden Ast der Strom-Spannungskennlinie befindet.

Der Erfindung liegt die Aufgabe zugrunde, eine Metalldampfentladungslampe zu entwickeln, die bei sehr guten Farbwiedergabeeigenschaften Licht mit einer ähnlichsten Farbtemperatur im Bereich von 3000 bis 4000 K aussendet und auch bei niedrigen Leistungsumsätzen eine hohe Lichtausbeute besitzt. Eine solche Lichtquelle soll uneingeschränkt für Innenraumbeleuchtung verwendbar sein und sich insbesondere im Wohnbereich zum Einsatz als Glühlampenalternative bei erheblichen Einsparungen an Elektroenergie eignen. Die technische Aufgabe der Erfindung, eine solche Lichtquelle zu entwickeln, besteht weiterhin darin, ein Medium zu finden, das bei Anregung in einer elektrischen Entladung imstande ist, ein intensives Kontinuum im sichtbaren Spektralbereich auszusenden und auf dieser Grundlage Farbwiedergabeindices über 90 bei Farbtemperaturen von 3000 bis 4000 K zu realisieren, für dieses Medium einen Plasmazustand aufzufinden, bei dem diese Kontinuumsstrahlung mit hoher Ausbeute erzeugt wird und schließlich die technischen Mittel zur Realisierung eines solchen Plasmazustandes anzugeben.

Erfindungsgemäß wird diese Aufgabe dadurch gelöst, daß in einem lichtdurchlässigen Entladungsgefäß mit Elektroden eine Entladung im Dampf eines schweren Alkalimetalls, Caesium oder Rubidium durch elektrische Impulse mit hoher Folgefrequenz und kleinem Tastverhältnis betrieben wird.

Dazu wird der Entladung während der Impulse eine Momentanleistung zugeführt, welche die im Interesse der Lebensdauer des Entladungsrohres im Dauerbetrieb zulässige mittlere Leistung N um den Faktor 5 oder mehr übersteigt. Die Impulsfolgefrequenz wird gleich oder größer als 100 Hz gewählt, so daß sie hinreichend weit oberhalb der Flimmerverschmelzungsfrequenz des menschlichen Auges liegt und diesbezügliche sehphysiologische Probleme vermieden werden. Die Impulslänge läßt sich dann aus der Bedingung errechnen, daß die im gesamtzeitlichen Mittel eingespeiste Leistung gleich der im Dauerbetrieb zulässigen und für die Verdampfung der Alkalimetalle auch erforderlichen mittleren Leistung N ist. Allerdings sollten sowohl die Momentanleistung während der Impulse als auch die Impulsfolgefrequenz in der Weise nach oben begrenzt werden, daß die so berechneten Impulslängen einen Wert von 10 μs nicht unterschreiten, weil sonst infolge der thermischen Trägheit der Entladung der beabsichtigte Effekt nur unvollkommen erreicht wird.

Es ist möglich, die Entladung zwischen den Impulsen mit Hilfe eines Haltestromes von 20 % des durchschnittlichen Stromes oder weniger weiterzubetreiben, so daß sie nicht verlischt und nicht zu Beginn jedes Impulses neu gezündet werden muß. Außerdem ist es bei Verwendung kombinierter Entladungsmedien vorteilhaft, der Lampe die Impulse mit alternierender Polarität zuzuführen und den Haltestrom durch einen synchronen Wechselstrom zu realisieren, um einer Entmischung durch Kataphorese vorzubeugen.

Die unerwartete Steigerung der Lichtausbeute auf ein Vielfaches gegenüber stationärem Betrieb entsprechender Entladungen bei gleichzeitig exzellenten Farbwiedergabeeigenschaften durch die erstmalige Anwendung der Impulseinspeisung auf Caesium- bzw. Rubidiumplasmen unter den ermittelten konkreten Bedingungen kann durch das günstige Zusammentreffen verschiedener Sachverhalte erklärt werden. Insbesondere kommt es auch bei gesamtzeitlicher Mittelwertbildung zu einer Anhebung des nach außen abgestrahlten Rekombinationskontinuums zu Lasten der lichttechnisch unwirksamen Resonanzlinien und zu einer relativen Absenkung der durch die Wärmeleitung verursachten Energieverluste.

Ein weiterer Vorzug dieser Betriebsart besteht darin, daß bei Impulsleistungen, die um den Faktor 5 und mehr oberhalb der stationär zulässigen Leistung liegen, die Elektronendichte mit einer weiteren Steigerung der Leistung nicht mehr nennenswert wächst. Deshalb steigt dabei auch die elektrische Leitfähigkeit nur noch unwesentlich an, und die Entladung gewinnt eine positive Charakteristik. Auf diese Weise werden die bei Metalldampf-Entladungslampen üblichen platzraubenden, schweren und verlustbehafteten Bauelemente zur Strombegrenzung entbehrlich, und die Stromversorgungsgeräte für solche Lampen werden besonders einfach im Aufbau.

Der Wirkungsgrad der erfindungsgemäßen Lampe kann weiter erhöht werden, indem dem Entladungsmedium zusätzlich Natrium beigefügt wird. Die Resonanzlinien des Natriums liegen bei einer Wellenlänge von 589 nm im gelben Spektralbereich in der Nähe des Maximums der Augenempfindlichkeit. Sie können auch im Impulsbetrieb mit großem lichttechnischen Wirkungsgrad abgestrahlt werden, und ihre Emission addiert sich zu der des Rekombinationskontinuums mit dem Ergebnis einer weiteren Erhöhung der Lichtausbeute der Lampe.

Weitere Verbesserungen der Lampe in bezug auf eine Anhebung der ähnlichsten Farbtemperatur können durch Zusätze von Quecksilber und/oder Cadmium und/oder Zink zum Entladungsmedium erfolgen. Aufgrund der durch den Impulsbetrieb der Lampe erhöhten Plasmatemperatur werden nun auch die mit Anregungsenergien $E_a$ im Bereich von 6.4 bis 7.7 eV sonst schwer anregbaren Spektrallinien 405, 436, 546 und 577/79 nm des Quecksilbers, 468, 480, 509 und 644 nm des Cadmiums und 468, 472, 481 und 636 nm des Zinks zur Emission gebracht. Sie liegen überwiegend im kurzwelligen Teil des sichtbaren Spektralbereiches und nehmen Einfluß auf die ähnlichste Farbtemperatur der Lampe.

Schließlich können die Gebrauchseigenschaften der Lampe noch dadurch abgerundet werden, daß dem Entladungsmedium in an sich bekannter Weise Quecksilber oder Xenon als Puffergas und Xenon oder ein anderes Edelgas als Zündgas zugesetzt werden, um das Verhalten der Lampe bei der Zündung und während des Anlaufvorganges günstig zu gestalten und im Falle des Zu satzes von Natrium auch das Linienprofil der Natrium-Resonanzlinien im Hinblick auf die Lichtemission zu optimieren.

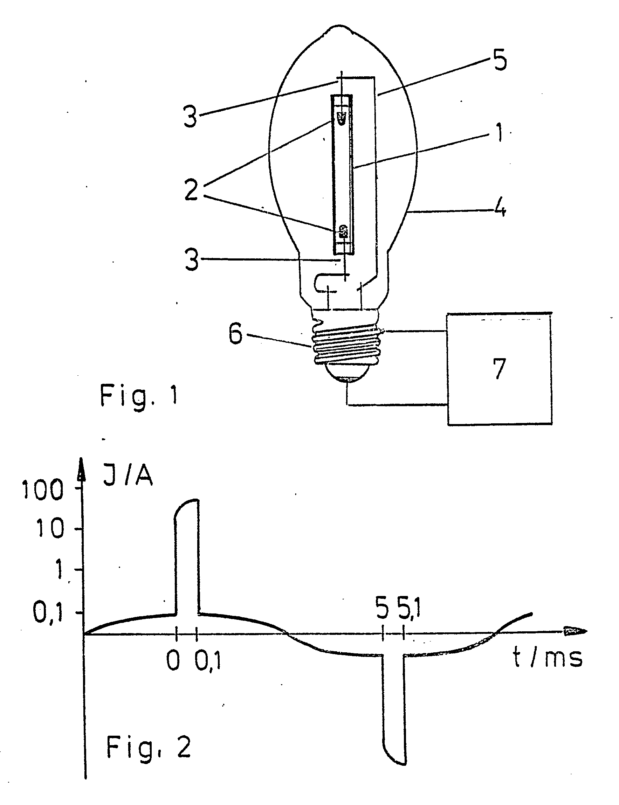

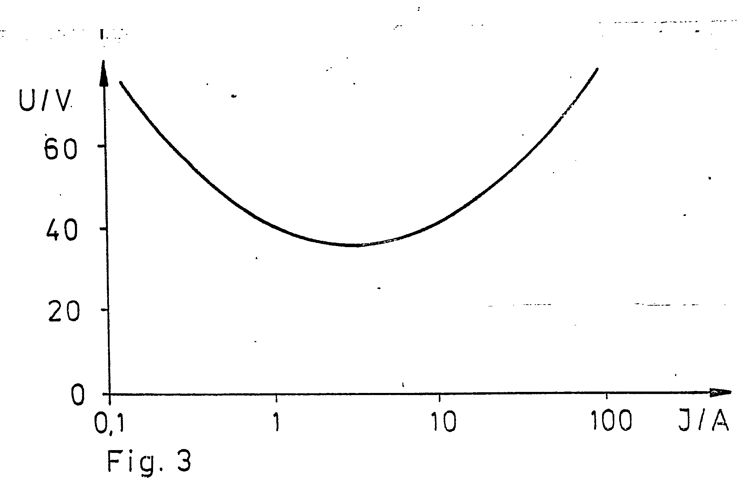

Die Erfindung soll nachstehend in einem Ausführungsbeispiel, das für eine elektrische Leistung von 70 W ausgelegt ist und anhand der Figuren erläutert wird, näher beschrieben werden. Fig. 1 zeigt eine zylindrisches Entladungsrohr 1 aus durchscheinend gesintertem Aluminiumoxid mit einem Innendurchmesser von 3.5 mm, mit zwei einander im Abstand von 36 mm gegenüberstehenden Elektroden 2 und mit vakuumdicht eingekitteten Stromzuführungen 3, das mit 1,5 mg Caesium und 4,0 mg Quecksilber gefüllt wird. Als Zündgas wird zusätzlich Xenon bei einem Kaltdruck von 6 kPa eingebracht. Dieses Entladungsrohr ist von einem evakuierten Außenkolben 4 umgeben, wobei ein Gestellaufbau 5 die mechanische Halterung des Entladungsrohres und die elektrische Verbindung der Stromzuführungen mit dem Sockel 6 übernimmt. Entladungsrohr, Gestellaufbau, Außenkolben und Sockel bilden zusammen die Entladungslampe. Die Lampe wird durch eine Stromversorgungsgerät 7 in der Weise betrieben, daß ihr pro Sekunde 200 Stromimpulse mit einer Impulsdauer von t = 100 μs und einer Maximalstromstärke im Impuls von 50 A mit alternierender Polarität zugeführt werden. Diese Impulse werden einem Haltestrom in Form eines 100-Hz-Wechselstromes mit einem Effektivwert von 0.1 A so überlagert, daß Impuls und Maximum des Haltestromes bei gleicher Polarität zeitlich etwa zusammenfallen. Fig. 2 zeigt den Verlauf des Lampenstromes als Funktion der Zeit. Die so mit leistungsstarken Impulsen betriebene Alkalimetalldampf-Entladungslampe emittiert bei einer mittleren Leistungsaufnahme von 70 W einen Lichtstrom von 3400 lm. Ihre Farbtemperatur beträgt 3500 K, und ihr allgemeiner Farbwiedergabeindex hat den Wert 96. Die von der Entladung ausgebildete Strom-Spannungscharakteristik ist in Fig. 3 dargestellt; sie hat im Bereich der Impulsstromstärke den gewünschten positiven Anstieg.

## Ansprüche

1. Wandstabilisierte Metalldampf-Entladungslampe für allgemeine Beleuchtungszwecke, bestehend aus einem lichtdurchlässigen Entladungsgefäß mit Elektroden und gefüllt mit einem Entladungsmedium, gekennzeichnet durch die Kombination aus der Verwendung des Dampfes von Caesium und/oder Rubidium als Hauptentladungsmedium mit der Stromversorgung der Lampe durch leistungsstarke Impulse mit einer Folgefrequenz von mindestens 100 Hz und mit einem Verhältnis von Momentanleistung im Impuls zum zeitlichen Mittelwert der Leistung von mindestens 5 : 1 und mit Impulslängen von mindestens 10 μs und einem Tastverhältnis < 0,2.

2. Wandstabilisierte Metalldampf-Entladungslampe nach Anspruch 1, dadurch gekennzeichnet, daß das Entladungsmedium zusätzlich Natriumdampf enthält.

3. Wandstabilisierte Metalldampf-Entladungslampe nach Anspruch 1, dadurch gekennzeichnet, daß das Entladungsmedium zusätzlich den Dampf von Quecksilber und/oder Cadmium und/oder Zink enthält.

4. Wandstabilisierte Metalldampf-Entladungslampe nach Anspruch 1, dadurch gekennzeichnet, daß das Entladungsmedium zusätzlich Xenon oder ein anderes Edelgas enthält.

5. Wandstabilisierte Metalldampf-Entladungslampe nach Anspruch 1, dadurch gekennzeichnet, daß die Entladung in der Lampe während der Zeit zwischen den Impulsen durch einen Haltestrom von bis zu 20 % des durchschnittlichen Stromes aufrechterhalten wird.

Fig. 1

Fig. 2

Fig. 3

# Europäisches Patentamt

## EUROPÄISCHER RECHERCHENBERICHT

| | EINSCHLÄGIGE DOKUMENTE | | EP 89105244.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | US - A - 3 624 447 (YOUNG) | 1 | H 01 J 61/22 |
| D,A | * Gesamt * | 5 | H 01 J 61/82 |
| | -- | | H 05 B 41/16 |
| Y | GB - A - 965 225 (GENERAL ELECTRIC) | 1 | |
| A | * Fig. 1; Seite 2, Zeilen 71-74; Ansprüche 1-6 * | 4 | |
| | -- | | |
| D,A | DE - A1 - 2 707 203 (EGYESÜLT IZZOLAMPA) * Seite 10, Zeilen 13-20 * | 1,2 | |
| | -- | | |
| D,A | US - A - 2 971 110 (SCHMIDT) * Anspruch 1 * | 1,3 | |
| | -- | | |
| D,A | DE - A - 2 032 615 (MATSUSHITA) * Anspruch 2 * | 3,4 | RECHERCHIERTE SACHGEBIETE (Int. Cl.4) |
| | -- | | |
| A | US - A - 4 128 788 (LOWTHER) | | H 01 J 61/00 H 05 B 41/00 |
| | ---- | | |

Der vorliegende Recherchenbericht wurde für alle Patentansprüche erstellt.

| Recherchenort | Abschlußdatum der Recherche | Prüfer |
|---|---|---|
| WIEN | 19-06-1989 | BRUNNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82